# EUROPEAN PATENT APPLICATION

(11) **EP 1 402 789 A1**
(43) Date of publication of application: **31.03.2004**
(21) Application number: 02745445.3
(22) Date of filing: 04.07.2002
(51) Int. Cl.: A23L 1/33

(54) **METHOD OF OBTAINING THERMOFORMED PRODUCTS USING DENSE AND LIQUID ANTARCTIC KRILL FRACTIONS**

(30) Priority: 04.07.2001 WO PCT/ES01/00263
(71) Applicant: ANGULAS AGUINAGA, S.A., E-20270 Irura (Guipuzcoa) (ES)
(72) Inventor: PIVOVAROV, Pavel, Petrovich, E-20270 Irura (ES); PIVOVAROV, Eugeniy, Pavlovich, E-20270 Irura (ES)
(74) Representative: Carpintero Lopez, Francisco
(86) International application number: PCT/ES2002/000333
(87) International publication number: WO 2003/003857

(57) **Abstract**

The method involves, once the Antarctic krill has been separated into two fractions, a liquid fraction and a dense fraction, remixing and homogenizing these fractions and adding additives to the mixture such as salt, carbohydrates and fats, to then use an appropriate heat treatment to obtain its jellification in molds or in a heat extruder.

## Description

### OBJECT OF THE INVENTION

The present invention relates to obtaining hot-formed products from the liquid fraction and the dense fraction obtained from Antarctic krill when it is broken down.

By means of this method it is possible to obtain hot-formed food products with high nutritional and biological properties, with an isotropic and/or anisotropic structure and good organoleptic characteristics.

The addition of additives allows obtaining products with a high added value, with a flavor and texture similar to natural inspiration products.

### BACKGROUND OF THE INVENTION

Because of its abundance and the chemical makeup of its ingredients, krill has become a raw material of industrial interest. Despite the many studies conducted on the properties of krill and the possibility of using it for human nourishment, currently available food products have a low demand due to the singular characteristics of this raw material and the technical and technological processes involved.

Muscle tissue consists of myofibril proteins. Sarcoplasmic proteins are found in sarcoplasma. The coagulation temperatures of the two types of protein are different: myofibril proteins coagulate in an interval between 40 and 60°C, while sarcoplasmic proteins do so between 70 and 95°C, making them incompatible, as when the former coagulate they release water and dilute the latter proteins. In addition, when the sarcoplasmic proteins coagulate they adhere to the myofibril proteins, preventing the uniform jellification of the latter.

Because of this, all methods for obtaining products from myofibril proteins involve several washes of the raw material in order to eliminate the sarcoplasma and with it the sarcoplasmic proteins. However, along with the sarcoplasmic proteins other substances are eliminated contained in the sarcoplasma, which, to a great extent, determine the characteristic smell of krill; among these are the lipids with all the biologically active matter.

Depending on the heat treatments applied subsequently, the dense fraction of krill may conserve its functional and nutritional properties, or these properties can be reduced to be used as a source of protein and as filler in other products.

International Patent PCT/ES01/00249 describes a method for transforming Antarctic krill and crustaceans in general into two fractions, a liquid fraction (biological liquid) and a dense fraction, where the proteins, nutrients and biological components of the initial krill remain intact.

These fractions, liquid and dense, can be processed onsite and transformed into other products or they can be frozen for later use in various industrial sectors.

### DESCRIPTION OF THE INVENTION

The present invention is based on the use of the liquid fraction (biological liquid) and the dense fraction of Antarctic krill as raw materials for producing hot-formed food products.

The liquid fraction is mixed and homogenized with the dense fraction and one or more additives are added, such as salt, carbohydrates, wheat flour or flour from other seeds, proteins (such as minced fish), fats, vitamins, stabilizers and the combinations thereof.

By varying the composition of this mixture it is possible to obtain the desired texture and flavor, emulating natural products such as seafood.

Moreover, addition of additives allows minimizing the problems that may derive from variations in the composition of the initial krill depending on the time and place of capture. These variations in the initial product can be compensated by a suitable formulation of additives to allow producing food products with a high added value, imitating the texture and flavor of natural inspiration products.

For a proper conservation of the high nutritional properties of the original Antarctic krill, it is advisable that the liquid fraction and the edible dense fraction together represent at least 50% of the total final mass.

According to the present invention, the method involves the following stages:
a) The Antarctic krill is separated into two fractions: the liquid and dense fractions.
b) The dense fraction obtained in stage (a) is subjected to the usual treatments in order to obtain the edible dense fraction, or it is frozen at -18° and conserved for later use.
c) The liquid fraction obtained in stage (a) is mixed and/or homogenized with the edible dense fraction obtained in stage (b) and with one or more additives such as salt, carbohydrates, wheat flour or flour of other seeds, proteins, fats, vitamins and stabilizers such as Santana gum, and combinations thereof.
d) The mixture resulting from stage (c) is placed in a mold with the desired shape or in the hopper of a heat extruder.
e) The mixture placed in molds is subjected to a suitable heat treatment to jellify it, consisting of heating to between 70 and 95° for a time that depends on the shape and volume of the product to be obtained.
   If the mixture is placed in the hopper of an extruder the mass will be extruded to the desired shape with the heat treatment required for jellification taking place simultaneously or afterwards. The jollification temperature in this case is also between 70 and 95° and the time depends on the shape, mass and volume of the product, and naturally on the characteristics of the heat extruder employed.
f) The product obtained in stage d) is cooled to provide a hot-formed food product based on Antarctic krill, with a texture and flavor that depend on the percentage of additive mass used in stage c) and on the natural variations of the original Antarctic krill.

More specifically, the method for obtaining hot-formed products from Antarctic krill begins with the separation of the freshly fished or thawed krill into two fractions, a liquid fraction and a dense fraction.

The raw krill meat is obtained from the dense fraction, which consists of the meat and shells, or it can be subjected to a treatment generally referred to as bleaching at a temperature above 65°C.

The edible dense fraction (cooked meat) present in the bleached dense fraction is separated from the shells found in the bleached dense fraction. This separation can be performed by any conventional technique, such as peeling, dispersion at low temperatures (under 0°C), by density differences in a saline solution or by abrasion.

The edible dense fraction (raw or cooked krill meat) obtained as described from the dense fraction by known methods, is mixed with the liquid fraction until obtaining a uniform mixture. Depending on the characteristics of the krill used and on the texture and flavor of the product to be obtained one or more food additives are added to the mixture in proportions such that the mixture of the liquid fraction and the edible dense fraction represents at least 50% of the total mass.

The homogenized mixture is dosed in molds or placed in the hopper of a heat extruder and subjected to treatment at temperatures between 70 and 95°C for a time varying between seconds or occasionally several minutes, depending on the characteristics of the heat extrusion facilities and particularly on the thickness and shape of the product to be obtained.

The product thus obtained is a gel with the size and shape of the mold or as determined by the heat extruder nozzle, with an isotropic or anisotropic structure. In general, the degree of anisotropy of the hot-formed product increases with the content of the edible dense fraction.

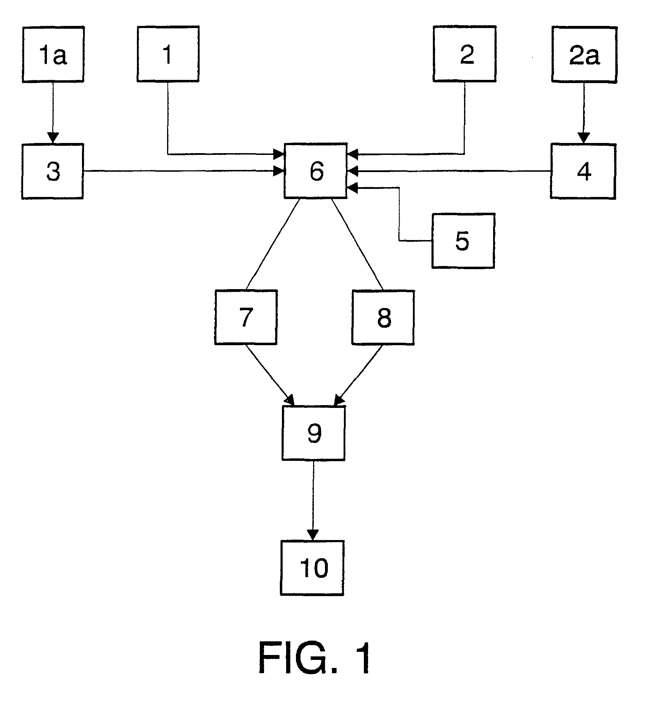

Figure 1, which illustrates the present descriptive memory, shows the various stages of the method for manufacturing a hot-formed food product from the liquid fraction and the edible dense fraction obtained from transforming Antarctic krill.

In this way, according to usual methods the edible dense fraction is obtained from the dense fraction. The liquid fraction (1) or frozen liquid fraction (1a), after a controlled thawing (3), passes to a homogenizer (6) together with the edible dense fraction (2) or the frozen edible dense fraction (2a) after its controlled thawing (4). The remaining ingredients (5) can be added to the homogenizer (6). After homogenizing the liquid fraction, the edible dense fraction and the additional ingredients, the mixture is placed in molds (7) or in the hopper of a heat extruder (8) and subjected to a heat treatment at temperatures between 70 and 95°C, to obtain a jellified product that is later cooled (9) to provide the finished product (12).

The references in the scheme shown in figure 1 correspond to:
1. Recently extracted liquid fraction
1a. Frozen liquid fraction
2. Recently extracted edible dense fraction
2a. Frozen edible dense fraction
3. Thawing of the liquid fraction
4. Thawing of the edible dense fraction
5. Other ingredients
6. Homogenization
7. Molding
8. Heat extrusion
9. Cooling
10.Finished product.

Below are described a number of examples with the results obtained, summarized in the accompanying table.

Example n° 1. 240 g of liquid fraction (77.1% in mass) are mixed with 1.55 g (0.5% in mass) common salt and 70 g (22.4% in mass) of cooked krill meat. Molds are filled with this mixture and later subjected to a heat treatment at 95°C for 15 minutes. Upon cooling a hot-formed product is obtained, jellified, with an anisotropic structure including bits of meat, which does not suffer from syneresis and tastes like seafood. This product adopts the shape of the mold where it is heat-treated.

Example n° 2. As in example 1, with the difference that 209 g of liquid fraction (59.92%) are mixed with 70 g of cooked krill meat (20.07%), 1.55 g common salt (0.44%) and 3.1 g sugar (0.88%), 1.55 g of starch (0.44%) and 51.15 g of egg white (14.66%) are dispersed and 12.4 g of vegetable oil (3.56%) are emulsified. The mixture obtained is extruded through a round nozzle of an extruding machine at a temperature of 70°C for 30 minutes. A jellified product is obtained with an anisotropic structure and rigid consistency, not suffering from syneresis, with a cylindrical shape and seafood flavor.

Example n° 3. As in example 1, with the difference that 209 g of liquid fraction (99% in mass) are mixed with 1.2 g (0.5% in mass) of cooked krill meat and 1.2 g (0.5% in mass) common salt. The mixture is homogenized, poured into molds and heat treated from approximately 20 minutes at a temperature of 85°C. A jellified product is obtained with an isotropic structure and rigid consistency, not suffering from syneresis, with a seafood flavor and pale pink in color, in the shape of the mold.

Example n° 4. As in example 1, with the difference that 70 g (79.5% in mass) of krill meat are mixed with 17.61 g (20% in mass) of liquid fraction and 0.44 g (0.5% in mass) of egg white powder. The mixture obtained is heat treated at 83°C for 30 minutes. A hot-formed jellified product is obtained with a rigid consistency, anisotropic structure and an irregular white/pinkish color resembling crabmeat.

Example n° 5. Same as in example 4, with the difference that 72 g of meat are mixed with 15 g of liquid fraction. The mixture obtained is heat treated at 98°C for 32 minutes. As a result of insufficient gelling agent the liquid fraction in this procedure, despite the longer heat treatment at a higher temperature, does not allow obtaining a hot-formed product. The objective is not achieved.

Example n° 6. As in example 3, with the difference that the heat treatment is conducted at 65°C for 40 minutes. Despite the relative excess of gelling agent, the liquid fraction in the present procedure and the longer heat treatment, the hot-formed product is not obtained, as the correct gelling temperature is not applied. The objective is not achieved.

Example n° 7. As in example 2, with the difference that the heat treatment is carried out for 0.4 minutes and all ingredients other than those obtained from krill have been eliminated. The hot-formed product is not obtained, as the mixture does not jellify. The objective is not achieved.

Example n° 8. As in example 7, with the difference that the starch content is 2.0 g and there is 3.0 g of common salt. The hot-formed product is not obtained, as the mixture does not jellify, despite the increased amounts of non-krill ingredients. The objective is not achieved.

Example n° 9. As in example 1, with the difference that added to the formulation are 8 g of egg white, sugar, starch and vegetable oil in identical amounts. After the heat treatment a hot-formed anisotropic product is obtained with a seafood flavor.

## Claims

1. Method for obtaining hot-formed products from the liquid and dense fractions of Antarctic krill, beginning with the separation of Antarctic krill into two fractions, a liquid one and a dense one, which can be frozen for later use after a controlled thawing or can be processed onsite, **characterized in that** the dense fraction, in raw state or previously bleached to extract the edible dense fraction, is mixed with the liquid fraction and optionally with one or more additional ingredients such as salt, carbohydrates, wheat flour or other flours, proteins, vitamins, stabilizers or the mixtures thereof.

2. Method for obtaining hot-formed products from the liquid and edible dense fractions of Antarctic krill, according to claim 2, **characterized in that** the method includes the following stages:
a) Mixing and homogenizing the liquid and the edible dense fraction with one or more optional additives such as salt, carbohydrates, wheat flour or other flours, proteins, fats, vitamins, stabilizers and combinations thereof.
b) The mixture resulting from stage (a) is placed in molds having the desired shape or in the hopper of a heat extruder.
c) The mixture placed in the molds is subjected to a suitable heat treatment for jellification, consisting of heating to between 70 and 95° for a time that depends on the shape and mass or the product to be obtained, or
If the mixture has been placed in the hopper of a heat extruder, the product will be extruded and immediately or simultaneously jellified by providing the required heat for a time depending on the shape and mass of product to be obtained and, in this case, on the characteristics of the heat machine.
d) The product resulting from stage (c) is cooled to obtain a hot-formed food product.

3. Method for obtaining hot-formed products from the liquid and dense fractions of Antarctic krill, according to claim 1, **characterized in that** the amount of liquid and edible dense fractions of krill represent at least 50% of the total mass.

4. Method for obtaining hot-formed products from the liquid and edible dense fractions of Antarctic krill, according to claims 1 and 2, **characterized in that** the isotropy or anisotropy of the product is controlled by changing the weight ratio of the liquid and solid edible fractions.
